# EUROPEAN PATENT APPLICATION

(11) **EP 2 648 487 A1**
(43) Date of publication of application: **09.10.2013**
(21) Application number: 13161871.2
(22) Date of filing: 29.03.2013
(51) Int. Cl.: H05B 37/02

(54) **Illumination device and illumination control system of the illumination device**

(30) Priority: 03.04.2012 TW 101111904
(71) Applicant: Ingrasys Technology Inc., New Taipei (TW)
(72) Inventor: Sun, Yu-Hung, Taoyuan (TW)
(74) Representative: Gray, John James

(57) **Abstract**

An illumination device (506) obtaining an internet protocol (IP) address from a dynamic host configuration protocol (DHCP) server (508) includes a first sensor (50), an illumination unit (60), a processor (10), and a registered jack 45 (RJ-45) interface (902). The first sensor (50) is configured to output a first detecting signal with respect to an ambient luminance. The illumination unit (60) includes a lighting module (600) and a driving module (602) capable of controlling operation status of the lighting module (600). The processor (10) is configured to output a control signal to the driving module according to the first detecting signal. The RJ-45 interface (902) enables the illumination device (506) to be coupled to a client (504) over a network (202). The client (504) is utilized to monitor the illumination device (506) remotely.

## Description

### BackGround

### Technical Field

The present disclosure relates to illumination devices, and particularly to an illumination device capable of being monitored remotely.

### Description of Related Art

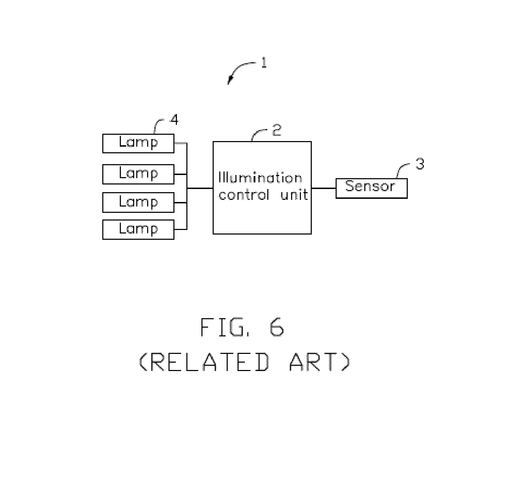

Conventional illumination devices usually employ an illumination control unit, such as a microprocessor, to monitor the status of lamps, which is shown in FIG. 6. The illumination device 1 may include an illumination control unit 2, a sensor 3 coupled to the illumination control unit 2, and a plurality of lamps 4 coupled to the illumination control unit 2. The luminance of the lamps 4 can be changed with respect to the ambient luminance where the illumination devices are positioned. However, the illumination device 1 is difficult to monitor remotely. For example, a malfunctioned lamp 4 may not be discovered immediately, the user may be required to check each lamp in the locale, to maintain the illumination devices. This can be time consuming and inefficient.

Therefore, there is room for improvement in the art.

### Summary

According to an exemplary embodiment of the invention, an illumination device obtains an internet protocol (IP) address from a dynamic host configuration protocol (DHCP) server. The illumination device includes a first sensor, an illumination unit, a processor, and a registered jack 45 (RJ-45) interface. The first sensor is configured to output a first detecting signal with respect to an ambient luminance. The illumination unit includes a lighting module and a driving module capable of controlling operation status of the lighting module. The processor is configured to output a control signal to the driving module according to the first detecting signal. The RJ-45 interface enabling the illumination device to be coupled to a client over a network. A client is utilized to monitor the illumination device remotely.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.

FIG. 1 is a block diagram of a first embodiment of an illumination control system, wherein the illumination control system includes an illumination device.

FIG. 2 is a block diagram of the illumination device of FIG. 1.

FIG. 3 is a block diagram of a second embodiment of an illumination control system.

FIG. 4 is a block diagram of a third embodiment of an illumination control system.

FIG. 5 is a block diagram of a fourth embodiment of an illumination control system.

FIG. 6 is a block diagram of a related-art illumination device.

### DETAILED DESCRIPTION

The disclosure, including the accompanying drawings, is illustrated by way of example and not by way of limitation. It should be noted that references to "an" or "one" embodiment in this disclosure are not necessarily to the same embodiment, and such references mean "at least one".

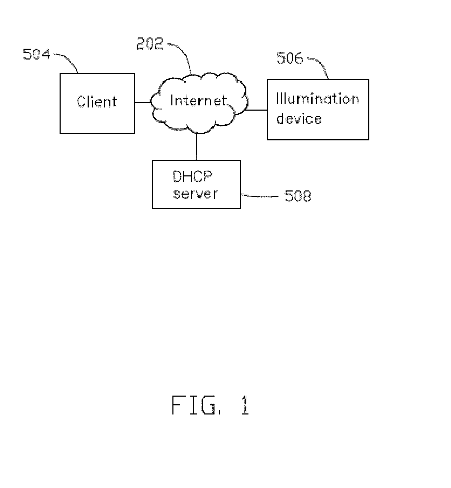

FIG. 1 illustrates a first embodiment of an illumination control system of the present disclosure. The illumination control system includes an illumination device 506 and a dynamic host configuration protocol (DHCP) server 508 connected over a network such as the Internet 202. A client 504 communicates with the illumination device 506 over the Internet 202, to monitor the illumination device 506. In other embodiments, the illumination control system may include two, three, or more illumination devices 506.

The DHCP server 508 provides internet protocol (IP) addresses for the client 504 and the illumination device 506 over the Internet 202. The client 504 and the illumination device 506 may send a request, respectively, to the DHCP server 508 to obtain an IP address. The DHCP server 508 may choose IP addresses from its IP pool, and assigns them to the client 504 and the illumination device 506. The client 504 and the illumination device 506 automatically configure their IP addresses according to the IP addresses received from the DHCP server 508. Accordingly, the user can monitor the illumination device 506 remotely over the internet 202 with respect to the IP address of the illumination device 506.

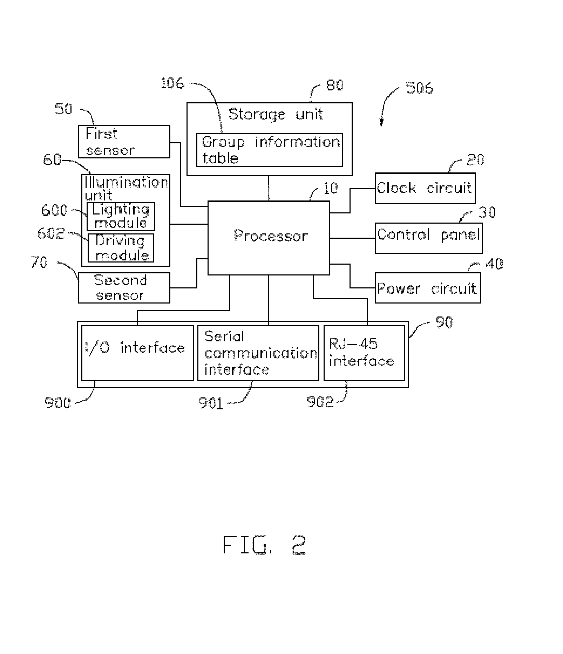

FIG. 2 illustrates the illumination device 506. The illumination device 506 includes a processor 10, a clock circuit 20 providing a clock signal for the processor 10, a control panel 30 coupled to the processor 10. The illumination device 506 further includes a power circuit 40 providing power for the illumination device 506, a first sensor 50 configured to detect the ambient luminance, an illumination unit 60, a second sensor 60 capable of detecting the luminance of the illumination unit 60, and, a storage unit 80. In addition, a communication unit 90 that enables the illumination device 506 to communicate with other peripheral devices. The illumination unit 60 includes a lighting module 600 and a driving module 602. The luminance of the illumination device 506 may be changed as long as the lighting module 600 receives a control signal from the driving module 602.

The control panel 30 may include a number of buttons that perform certain functions. In other embodiments, the IP address of the illumination device 506 can be assigned manually through the control panel 30.

The first sensor 50 may output a first detecting signal S_{F} to the processor 10 with respect to the ambient luminance. The processor 10 is configured to obtain the ambient luminance of the illumination device 506 according to the first detecting signal S_{F}, and outputs a control signal S_{L} to the driving module 602 in accordance with the ambient luminance, thereby enabling the driving module 602 to adjust the luminance of the lighting module 600 according to the ambient luminance. For example, when the illumination device 506 is in a high ambient, the processor 10 may output a control signal S_{L1} to the driving module 602, to weaken the luminance of the lighting module 600. Alternatively, the processor 10 may output a control signal S_{L3} to the driving module 602 to strengthen the luminance of the lighting module 600 in response to the illumination device 506 in a low ambient.

In other embodiments, the processor 10 may adjust the luminance of the illumination device 506 according to the clock signal from the clock circuit 20. In addition, the processor 10 may output a control signal S_{L2} to the driving module 602, thereby enabling the luminance of the illumination device 506 in an appropriate state according to the clock signal. The processor 10 may enable the lighting module 600 in a low luminance condition during 5:00-7:00 post meridiem (p.m.), and enabling the lighting module 600 in a high luminance condition during 7:00 pm to 6:00 ante meridiem (a.m.) daily.

The second sensor 70 is configured to output a second detecting signal S_{S} to the processor 10 with respect to the luminance of the illumination unit 60, so that the processor 10 may determine whether the illumination device 506 has malfunctioned or not. In one embodiment, the processor 10 may obtain the second detecting signal S_{S} after the control signal S_{L} is outputted for a period time. In addition, the processor 10 determines whether the luminance corresponding to the second detecting signal S_{S} is equal to the luminance corresponding to the control signal S_{L}. If the luminance corresponding to the second detecting signal S_{S} is not equal to the one corresponding to the control signal S_{L}, it indicates that the illumination device 506 has malfunctioned.

The power circuit 40 may support both alternate current (AC) power, and/or direct current (DC) power, so that the work flexibility of the illumination device 506 can be improved. In case the AC power has malfunctioned, the DC power can provide power for the illumination device 506.

The communication unit 90 includes an input output (I/O) interface 900, a serial communication interface 901, and a registered jack 45 (RJ-45) interface 902.

The processor 10 may be coupled to a peripheral device, a buzzer for example, through the I/O interface 900. The processor 10 may output an abnormal signal S_{A} to the buzzer through the I/O interface 900 in case that the illumination device 506 has malfunctioned.

The processor 10 of the illumination device 506 may be coupled to the processors 10 of other illumination devices 506 through a hub (not shown) with the serial communication interface 901. Accordingly, the illumination devices 506 can communicate with each other with the serial communication protocol, such as RS-485 protocol.

The processor 10 may be coupled to the internet 202 through the RJ-45 interface 902, so that the illumination device 506 can be monitored remotely.

The storage unit 80 may include a firmware. In one embodiment, the storage unit 80 includes a random access memory (RAM) and a read only memory (ROM). The firmware is first loaded from the ROM to the RAM and then executed by the processor, enabling a user to remotely monitor the illumination device 506 with the corresponding IP address of the illumination device 506.

The storage unit 80 may further include a group information table 106. The group information table 106 store device information corresponding to the illumination devices 506 that are needed to communicate with. The device information of one illumination device 506 may includes the serial addresses of the others. In other embodiments, if one illumination device 506 communicates with other devices through the RJ-45 interface 902, the device information, then, includes the IP addresses of the others.

For example, an IP address corresponding to one illumination device 506 is inputted in the address box of a web browser of the client 504. The client 504, then, sends a request to the illumination device 506. The illumination device 506 sends the statuses of the illumination device 506 back to the client 504, and the web pages show the user monitored details of the illumination device 506.

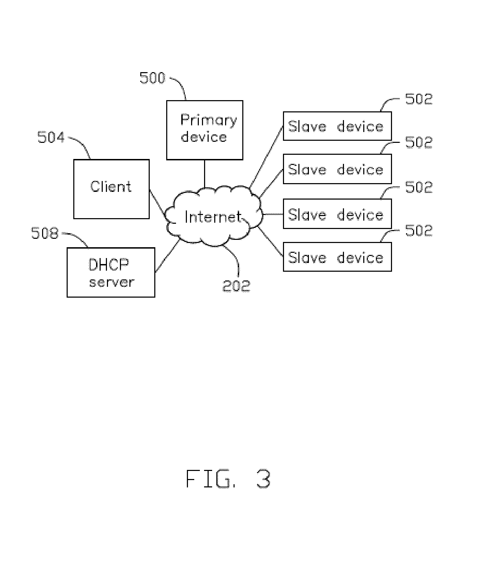

FIG. 3 illustrates a second embodiment of an illumination control system. The illumination control system includes a client 504, a DHCP server 508, a primary device 500 coupled to the client 504 over the Internet 202, a number of slave devices 502 connected over the Internet 202, and other elements as shown in the above-mentioned embodiment, such as the control panel 30 and the power circuit 40. More primary devices 500 may be included in other embodiments of the illumination control system. In one embodiment, the primary device 500, and the slave devices 502 are the illumination devices 506 mentioned in the first exemplary embodiment of the present disclosure. In other embodiments, the illumination devices 506 may further include two buttons, such as a primary button, and a slave button, standing for the operation modes of the devices. The primary device 500 operates in a primary mode as the primary button is pressed, and the slave devices 502 operate in a slave mode as the slave button is pressed.

In this embodiment, the group information table 106 of the primary device 500 may store the device information of all slave devices 502, such as the IP addresses of all slave devices 502. The group information tables 106 of all slave devices 502 may store the device information of the corresponding primary devices 500, such as the IP address of the primary device 500. In one embodiment, the device information stored in the primary device 500 stands for a group, and only one primary device should be in one group, and each slave device 502 can only communicate with the primary device 500 stored in the group information table 106 of the slave device 502. A user may monitor the slave devices 502 through the corresponding primary device 500.

In this embodiment, the slave devices 502 may store the IP address of the primary device 500 in the group information table 106 manually by inputting the IP address from the control panel 30. The slave device 502 then sends request to the IP address assigned from the control panel 30, which stands for the primary device 500. The primary device 500 stores the IP address of the slave device 502 from the request. Accordingly, the primary device 500 and the slave devices 502 can obtain the corresponding IP addresses from each other.

When a user needs to monitor the slave devices 502, the IP address of the primary devices 500 is inputted in the address box of the web browser of the client 504, wherein, the slave devices 502 are in the same group with the primary devices 500. The primary device 500 chooses the IP address with respect to the slave device 502 that the user required from the group information table 106 of the primary device 500, and send an internet signal E_{S} including an operation command to the slave device 502 through the RJ-45 interface 902 of the primary device 500. The processor 10 of the slave device 502 receives the internet signal E_{S}, and executes the operation command. For example, the processor 10 of the slave device 502 obtains the second detecting signal S_{S} to get the luminance of the slave device 502, and send an internet signal E_{S1} including the luminance of the slave device 502 back to the primary device 500 through the RJ-45 interface 902. After that, the primary device 500 transmits a web page including the luminance of the slave device 502 over the Internet 202 to the client 504. Accordingly, the user can obtain the exact status of the slave device 502 from the client 504.

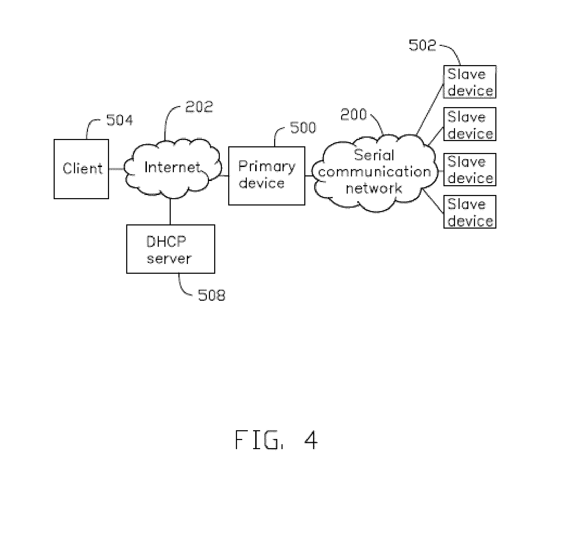

FIG. 4 illustrates a third embodiment of an illumination control system of the present disclosure. In the third embodiment, the primary device 500 may communicate with other slave devices 502 over a serial communication network 200.

In this embodiment, the primary device 500 is connected to the slave device 502 through the hub, and the primary device 500 sends out a broadcast to obtain the serial addresses of all the slave devices 502 over the serial communication network 200. At the same time, the slave devices 502 can also obtain the serial address of the primary device 500.

When the user needs to monitor the slave devices 502, the user inputs the IP address of the primary devices 500 in the address box of the web browser of the client 504. The primary device 500 may choose the serial address with respect to the slave device 502 that the user required from the group information table 106 of the primary device 500, and sends a serial signal E_{E} including an operation command to the slave device 502 through the serial communication interface 901. The processor 10 of the slave device 502 receives the serial signal E_{E}, and executes the operation command. For example, the processor 10 of the slave device 502 may obtain the second detecting signal S_{S} to get the luminance of the slave device 502, and send a serial signal E_{E1} including the luminance of the slave device 502 to the primary device 500 through the serial communication interface 200. After that, the primary device 500 may transmit a web page including the luminance of the slave device 502 over the Internet 202 to the client 504. Accordingly, the user can obtain the exact status of the slave device 502 from the client 504.

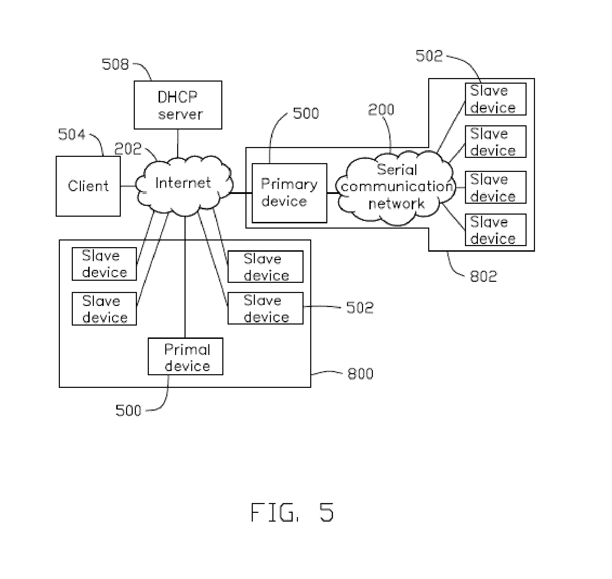

FIG. 5 illustrates a fourth embodiment of an illumination control system of the present disclosure. The illumination control system includes a first group 800, a second group 802, a DHCP server 508, and a client 504 to monitor the illumination device 506 in the first and second groups 800 and 802. In the embodiment, the second group 802 includes a primary device 500 and a number of slave devices 502 configured to communicate with the primary device 500 over the serial communication network 200. The first group 800 includes a primary device 500 and a number of slave devices 502 configured to communicate with the primary device 500 over the Internet 202. The fourth embodiment is a combination of the second and third embodiments. When the user needs to monitor the first group 800, the IP address of the primary device 500 in the first group 800 is required to be inputted in the address box of the web browser of the client 504, and the detailed working manner is the same as described in the third embodiment of the preset disclosure. When the user needs to monitor the second group 802, the IP address of the primary device 500 in the second group 802 is required to be inputted in the address box of the web browser of the client 504, and the detailed working manner is the same as described in the second embodiment of the preset disclosure.

The foregoing description of the embodiments of the disclosure has been presented only for the purposes of illustration and description and is not intended to be exhaustive or to limit the disclosure to the precise forms disclosed. Many modifications and variations are possible in light of the above disclosure. The embodiments were chosen and described in order to explain the principles of the disclosure and their practical application so as to enable others of ordinary skill in the art to utilize the disclosure and various embodiments and with various modifications as are suited to the particular use contemplated. Alternative embodiments will become apparent to those of ordinary skills in the art to which the present disclosure pertains without departing from its spirit and scope. Accordingly, the scope of the present disclosure is defined by the appended claims rather than by the foregoing description and the exemplary embodiments described therein.

## Claims

1. An illumination device obtaining an internet protocol (IP) address from a dynamic host configuration protocol (DHCP) server, comprising:
a first sensor configured to output a first detecting signal with respect to an ambient luminance;
an illumination unit comprising a lighting module, and a driving module capable of controlling working statuses of the lighting module;
a processor configured to output a control signal to the driving module according to the first detecting signal; and
a registered jack 45 (RJ-45) interface enabling the illumination device coupled to a client over a network;
wherein the processor is coupled to the RJ-45 interface, the client is utilized to monitor the illumination device remotely according to the IP address of the illumination device.

2. The illumination device of claim 1, further comprising a clock circuit, wherein the processor obtains time information according to a clock signal from the clock circuit, and adjusts the working statuses of the lighting module with respect to the clock signal.

3. The illumination device of claim 1 or 2, further comprising a second sensor, wherein the second sensor is configured to output a second detecting signal according to a luminance of the illumination unit, the processor is utilized to determine whether the luminance corresponding to the second detecting signal is equal to a luminance corresponding to the control signal, a determination is made that the illumination device is malfunctioning in response to the luminance corresponding to the second detecting signal being not equal to the luminance corresponding to the control signal.

4. The illumination device of claim 3, wherein the processor determines whether the luminance corresponding to the second detecting signal is equal to the luminance corresponding to the control signal after the control signal is outputted by the processor for a period of time.

5. The illumination device of claim 3 or 4, further comprising an input output (I/O) interface and an alarm device, wherein the alarm device is coupled to the processor through the I/O interface, the processor outputs an alarm signal to the alarm device as the illumination device being malfunctioned.

6. The illumination device of claim 5, wherein the alarm device is a buzzer.

7. An illumination control system, comprising:
a plurality of illumination devices divided into a plurality of groups, each illumination device comprising a storage unit defining a group information table, wherein each group comprises a primary device assigned with an internet protocol (IP) address and a plurality of slave devices coupled to the primary device in the same group, the group information table in the primary device comprises device information of the slave devices, and the group information table in the slave devices comprises device information of the primary device; and
a client coupled to the primary device of each group through a network;
wherein the primary device of each group operates in a first working mode, the slave devices of each group operate in a second working mode, each primary device is coupled to the network through a registered jack 45 (RJ-45) interface, the client is utilized to monitor the primary device and the slave devices in one group according to the IP address of the primary device.

8. The illumination control system of claim 7, wherein the slave devices of one group are coupled to the primary device in the same group over the network, each slave device is assigned with an IP address, the group information table of the slave devices stores the IP address of the primary device, and the group information table of the primary device stores the IP addresses of the slave devices.

9. The illumination control system of claim 7 or 8, wherein each illumination device further comprises a serial communication interface, each illumination device is assigned with a serial address, each slave device in one group is coupled to the primary device of the same group through a hub with the serial communication interface, the group information table of the slave devices stores the serial address of the primary device, and the group information table of the primary device stores the serial addresses of the slave devices.

10. The illumination control system of claim 7, 8 or 9, wherein each illumination device further comprises:
a first sensor configured to output a first detecting signal with respect to an ambient luminance;
a second sensor configured to output a second detecting signal with respect to a luminance of an illumination unit;
a control panel comprising a plurality of buttons; and
a processor configured to set operation mode of the illumination device as the buttons being pressed in the control panel.

11. The illumination control system of claim 10, wherein the IP addresses of each illumination device is set through the control panel.

12. The illumination control system of claim 10 or 11, wherein the second sensor is configured to output a second detecting signal according to a luminance of the illumination unit, a processor of the illumination device is utilized to determine whether the luminance corresponding to the second detecting signal is equal to luminance corresponding to the control signal output by the processor, wherein a determination is made that the illumination device is malfunctioning, in response to the luminance corresponding to the second detecting signal being not equal to the luminance corresponding to the control signal output by the processor.

13. The illumination control system of any of claims 7 to 12, further comprising a dynamic host configuration protocol (DHCP) server, the IP addresses of the illumination devices are assigned by the DHCP server.
